# EUROPEAN PATENT SPECIFICATION

(11) **EP 2 878 994 B1**
(45) Date of publication and mention of the grant of the patent: **06.05.2020**
(21) Application number: 12878646.4
(22) Date of filing: 12.12.2012
(51) Int. Cl.: G02F 1/1343, G02F 1/13, G09G 3/00

(54) **ARRAY SUBSTRATE, LIQUID CRYSTAL DISPLAY PANEL AND LIQUID CRYSTAL DISPLAY**
ARRAYSUBSTRAT, FLÜSSIGKRISTALLANZEIGETAFEL UND FLÜSSIGKRISTALLANZEIGE
SUBSTRAT EN RÉSEAU, PANNEAU D'AFFICHAGE À CRISTAUX LIQUIDES ET DISPOSITIF D'AFFICHAGE À CRISTAUX LIQUIDES

(30) Priority: 27.07.2012 CN 201210265619
(43) Date of publication of application: 03.06.2015
(73) Proprietor: BOE Technology Group Co., Ltd., Beijing 100015 (CN)
(72) Inventor: SUZUKI, Teruaki, Beijing 100176 (CN)
(74) Representative: Klunker IP Patentanwälte PartG mbB
(86) International application number: PCT/CN2012/086471
(87) International publication number: WO 2014/015621

(56) References cited:
- WO-A1-2011/083616
- WO-A1-2011/086743
- WO-A1-2011/086743
- CN-A- 102 789 100
- CN-Y- 2 705 805
- JP-A- 2002 139 736
- US-A1- 2006 232 537
- US-A1- 2008 273 134
- US-A1- 2009 040 449
- US-A1- 2010 091 231

## Description

### TECHNICAL FIELD

Embodiments of the present invention relate to an array substrate, a liquid crystal display panel and a liquid crystal display.

### BACKGROUND

In a thin film transistor liquid crystal display (TFT-LCD), by means of utilizing the intensity variation of an electric field across a liquid crystal layer, the orientation of liquid crystal molecules is changed, and thus the strength of transmitted light is controlled to display an image. Generally speaking, a complete liquid crystal display panel must have a backlight module, a polarizer, an upper substrate and a lower substrate, and a layer of liquid crystal molecules filled in a cell composed of the two substrates.

An electric field generated in a liquid crystal display substantially perpendicular to a substrate plane can be used to control the state of liquid crystal molecules. This liquid crystal display is generally referred to as a vertical electric field type liquid crystal display. In the vertical electric field type liquid crystal display, a first electrode is formed on a lower substrate sandwiching a liquid crystal layer, a second electrode is formed on an upper substrate, and after a voltage is applied to them, an electric field substantially perpendicular to the substrate plane that begins from the first electrode and guides to the second electrode will be formed.

An electric field generated in a liquid crystal display substantially parallel to a substrate plane can be used to control the state of liquid crystal molecules. This liquid crystal display is generally referred to as a transverse electric field type liquid crystal display. In the transverse electric field type liquid crystal display, a first electrode and a second electrode are usually formed on a lower substrate sandwiching a liquid crystal layer, and after a voltage is applied to them, an electric field substantially parallel to the substrate plane that begins from the first electrode and guides to the second electrode will be formed.

US 2010/0091231 A1 discloses a LCD device including: first and second substrates with a LC layer interposed therebetween; a first electrode formed on the LC layer side of the first substrate and having linear portions; a second electrode having linear portions formed along the linear portions of the first electrode and adjacent to the linear portions of the first electrode at a gap in plan view; and a third electrode formed on the liquid crystal layer side of the second substrate and having linear portions overlapping with the linear portions of the second electrode in plan view, wherein electric fields having different directions are generated between the first electrode and the second electrode and between the first electrode and the third electrode.

US 2008/0273134 A1, which is considered as the closest prior art, discloses a display device including a first substrate, a second substrate facing the first substrate, first to third electrodes formed on the first substrate, and a fourth electrode formed on the second substrate, wherein the first and second substrates include a main display region and an assistance display region, wherein the first and second electrodes form a horizontal electric field that is substantially parallel to the surfaces of the first and the second insulating substrates, and the third and fourth electrodes form a vertical electric field that is substantially perpendicular to the surfaces of the first and second substrates.

WO 2011/086743 A1 discloses a liquid LC display device provided with a first substrate and a second substrate, which are disposed to face each other, and a LC layer sandwiched between the first and the second substrates. The LC layer contains LC molecules having positive dielectric-constant anisotropy, and the LC molecules are aligned perpendicular to the surface of the first substrate when a voltage is not applied. The first substrate has a signal line, a scanning line, an insulating film, a first electrode having image signals supplied thereto via the signal line, and a second electrode. The first electrode has a first comb-teeth portion, and the second electrode has a second comb-teeth portion, and a trunk portion connected to the second comb-teeth portion. The first and the second comb-teeth portions are disposed to planarly face each other in a pixel, the second substrate has a third electrode that at least covers the display region, and the trunk portion is disposed on the LC layer side of the signal line and the scanning line with the insulating film therebetween, by overlapping the signal line and the scanning line.

US 2006/232537 A1 discloses an array substrate for an in-plane switching LCD device including a substrate, a gate line and a data line on the substrate and crossing each other to define a pixel region, a thin film transistor adjacent to a crossing of the gate line and the data line, a common electrode and a pixel electrode in the pixel region and spaced apart from each other, and a conductive pattern between the common and pixel electrodes.

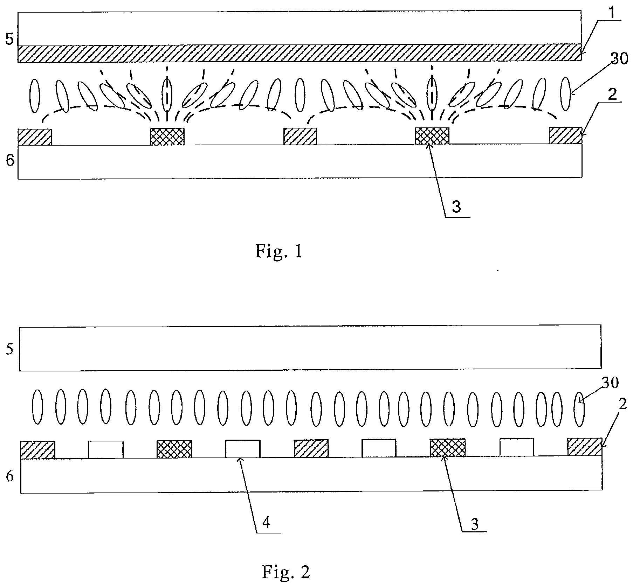

In prior art, there is also a case that a liquid crystal display with a vertical electric field and a transverse electric field is manufactured by combining advantages of the vertical electric field and the transverse electric field. As shown in FIG. 1, the liquid crystal display includes an upper substrate 5 and a lower substrate 6, and a liquid crystal layer 30 filled between the upper substrate 5 and the lower substrate 6. Herein, the upper substrate 5 includes a upper common electrode 1 on a side close to the liquid crystal layer 30, and the lower substrate 6 includes a first electrode (lower common electrode) 2 and a second electrode (pixel electrode) 3 that are located on a side close to the liquid crystal layer 30. After a voltage is applied, the upper common electrode 1 and the first electrode 2 are equal in electric potential, and no electric field is generated between them. The upper common electrode 1 and the second electrode 3 are unequal in electric potential, and a vertical electric field perpendicular to the substrate plane is generated. The first electrode 2 and the second electrode 3 are unequal in electric potential, and a transverse electric field parallel to the substrate plane is generated.

Compared with the transverse electric field type liquid crystal display, the number of bright and dark stripes in the liquid crystal display with the vertical electric field and the transverse electric field can be reduced. However, in a space region between the first electrode 2 and the second electrode 3 in this substrate, the deflection degree of liquid crystal molecules is still inadequate, thereby resulting in a fact that a corresponding zone is not bright enough. Namely, the display quality of the liquid crystal display may be affected. In this case, if an adequate brightness needs to be ensured, then it is necessary for a driving voltage of the first electrode 2 and the second electrode 3 to be increased.

### SUMMARY

It is an object of the present invention to provide an array substrate, a liquid crystal display panel and a liquid crystal display, in which it is possible that the deflection degree of liquid crystal molecules in a space region between the first electrode and the second electrode is increased without increasing the driving voltage of the first electrode and the second electrode, so that the luminance of a corresponding region is enhanced. In turn, the display quality of the liquid crystal display panel and the liquid crystal display can be improved.

The object is achieved with the features of the respective independent claims. Further embodiments are defined in the respective dependent claims.

According to embodiments of the present invention, there are provided an array substrate, a liquid crystal display panel and a liquid crystal display. There are a vertical electric field and a transverse electric field in the display panel at the same time, so that the vertical electric field distribution is relatively uniform, and the display quality of the liquid crystal display is improved.

According to one aspect of an embodiment of the invention, there is provided an array substrate comprising the features of appended independent claim 1.

In an embodiment of the invention, the first electrode strip, the second electrode strip and the third electrode strip are in the same plane.

According to another aspect of an embodiment of the invention, there is provided a liquid crystal display panel according to appended claim 3.

In an embodiment of the invention, the upper substrate comprises a fourth electrode on a side close to the liquid crystal layer.

In an embodiment of the invention, the fourth electrode and the first electrode are connected to each other.

In an embodiment of the invention, the upper substrate further comprises: a protective layer formed on the fourth electrode.

According to still another aspect of an embodiment of the invention, there is provided a liquid crystal display, comprising the above liquid crystal display panel.
With respect to the array substrate, the liquid crystal display panel and the liquid crystal display provided by embodiments of the invention, at least one third electrode is provided between the first electrode and the second electrode of the array substrate separated from each other, and the third electrode is not connected to each of the first electrode and the second electrode. After a voltage is applied, an electric field is generated between the second electrode and the third electrodes on two sides of it, and electric fields are generated between the third electrode and the first electrode and the second electrode on two sides of it, respectively. Thereby, it is possible that the deflection degree of liquid crystal molecules in the space region between the first electrode and the second electrode is increased without increasing the driving voltage of the first electrode and the second electrode, and accordingly, the luminance of a corresponding region is enhanced. In turn, the display quality of the liquid crystal display panel and the liquid crystal display can be improved. Further, a fourth electrode that is connected to the first electrode may be provided on a color filter substrate, so that a vertical electric field can be generated between the fourth electrode and each of the second electrode and the third electrode. Thus, the number of bright and dark stripes in the liquid crystal display can be reduced.

### BRIEF DESCRIPTION OF THE DRAWINGS

In order to clearly illustrate the technical solution of the embodiments of the invention, the drawings of the embodiments will be briefly described in the following; it is obvious that the described drawings are only related to some embodiments of the invention and thus are not limitative of the invention as defined in the claims.
FIG. 1 is a schematically sectional view illustrating a structure of a liquid crystal display panel in prior art;
FIG. 2 is a schematically sectional view illustrating a structure of an array substrate according to an example helpful to understand the invention;
FIG. 3 is a schematically sectional view illustrating a structure of a liquid crystal display panel according to another example helpful to understand the invention;
FIG. 4 is a schematically sectional view illustrating another structure of a liquid crystal display panel according to another example helpful to understand the invention;
FIG. 5 is a schematically top view illustrating a structure of a lower substrate of a liquid crystal display panel according to an example helpful to understand the invention;
FIG. 6 is a diagram illustrating an equivalent circuit of a lower substrate of a liquid crystal display panel according to an example helpful to understand the invention;
FIG. 7 is a schematically top view illustrating a structure of electrode strips of a lower substrate of a liquid crystal display panel according to an example helpful to understand the invention;
   and
FIG. 8 is a schematically top view illustrating a structure of electrode strips of a lower substrate of still another liquid crystal display panel provided by an embodiment of the invention.

### DETAILED DESCRIPTION

In order to make objects, technical details and advantages of the embodiments of the invention apparent, the technical solutions of the embodiment will be described in a clearly and fully understandable way in connection with the drawings related to examples helpful to understand the invention and the embodiments of the invention. It is obvious that the described embodiments are just a part but not all of the embodiments of the invention. Based on the described embodiments herein, those skilled in the art can obtain other embodiment(s), without any inventive work, which should be within the scope of the invention.

An array substrate provided by an example helpful to understand the invention, as shown in
FIG. 2, corresponds to a plurality of pixel regions, and the array substrate 6 includes a first electrode 2 and a second electrode 3 that are located on a side close to the liquid crystal layer 30 in correspondence to each of the pixel regions. The first electrode 2 includes at least one first electrode strip, and the second electrode 3 includes at least one second electrode strip. For example, the electrode strip here may be a comb-teeth electrode portion of a comb-shaped electrode. For example, the first electrode strip and the second electrode strip are disposed alternately on the array substrate 6.

The array substrate 6 further includes a third electrode 4 that is located on the side close to the liquid crystal layer 30 in correspondence to each of the pixel regions. The third electrode 4 includes at least one third electrode strip that is located between the first electrode strip and the second electrode strip that are adjacent; and an electric potential of the third electrode falls between an electric potential of the first electrode and an electric potential of the second electrode.

In an example helpful to understand the invention, for the array substrate 6, in each of the pixel regions, there are more than one for each of the first electrode strip, the second electrode strip and the third electrode strip, and moreover, the first electrode strips are electrically connected to each other, the second electrode strips are electrically connected to each other, and the third electrode strips are electrically connected to each other.

The first electrode strip, the second electrode strip and the third electrode strip may be in the same plane.

In an example helpful to understand the invention, the third electrode is in an electrically floating state.

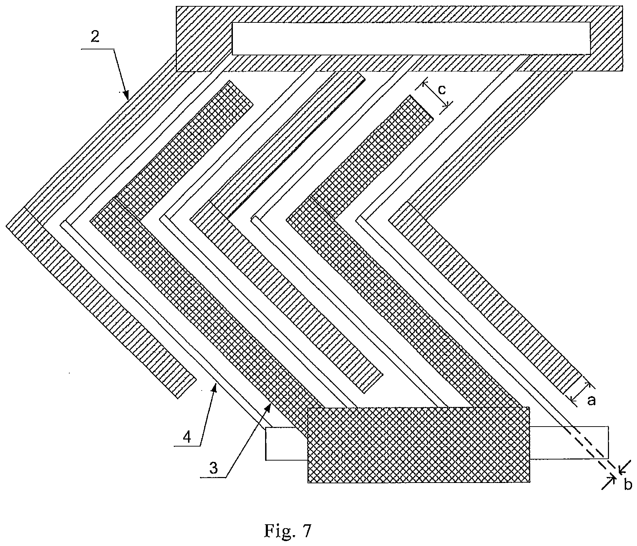

In an embodiment of the invention, the first electrode strip of the first electrode 2, the second electrode strip of the second electrode 3 and the third electrode strip of the third electrode 4 have different widths. With reference to FIG. 7, a width a of the first electrode strip, a width b of the third electrode strip, and a width c of the second electrode strip are not the same as each other.

In an example helpful to understand f the invention, the first electrode strip of the first electrode 2, the second electrode strip of the second electrode 3 and the third electrode strip of the third electrode 4 on the array substrate 6 may vary continuously in width on the plane. For example, each of the first electrode strip, the second electrode strip and the third electrode strip varies continuously in a manner of being wider in the upper part of the picture, and being narrower in the lower part of the picture. Of course, this is merely an example, and continuous variations in other form may also be possible.

In an example helpful to understand the invention, further, the first electrode strip of the first electrode 2, the second electrode strip of the second electrode 3 and the third electrode strip of the third electrode 4 on the array substrate 6 may take a form of a step on the plane. For example, each of the first electrode strip, the second electrode strip and the third electrode strip is narrower in the upper part of the picture, wider in the lower part of the picture, and changed from narrow to wide gradually in steps. Certainly, this is merely an example, and stepwise changes in other forms may also be possible.

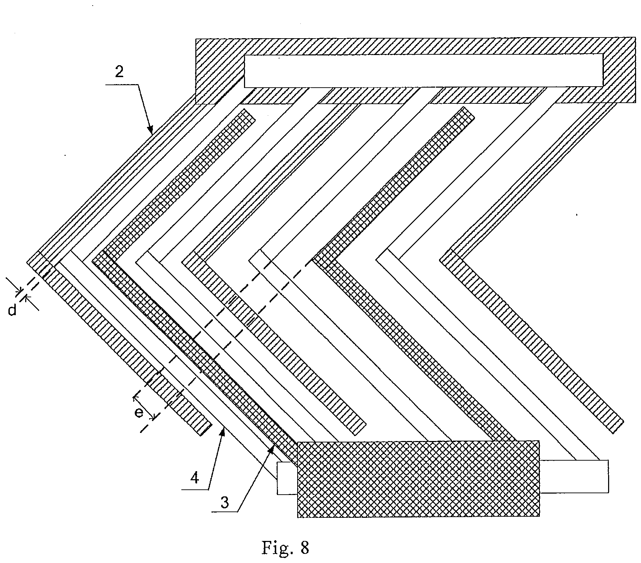

In an embodiment of the invention, a width of a spacing between the first electrode strip and the third electrode strip and a width of a spacing between the second electrode strip and the third electrode strip are different. In the embodiment of the invention, for example, as shown in FIG. 8, a space width d between the first electrode strip and the third electrode strip and a space width e between the second electrode strip and the third electrode strip are different. For example, in one pixel region, if a spacing on the left side of the picture is smaller than a spacing on the right side of the picture, the V-T property will be different, and the viewing angle property is better as well.

In an embodiment of the invention, widths of spacing between any adjacent the first electrode strip and the third electrode strip are different from each other, and widths of spacing between any adjacent the second electrode strip and the third electrode strip are different from each other.

In an embodiment of the invention, the first electrode strip, the second electrode strip and the third electrode strip each are bent into a V shape.

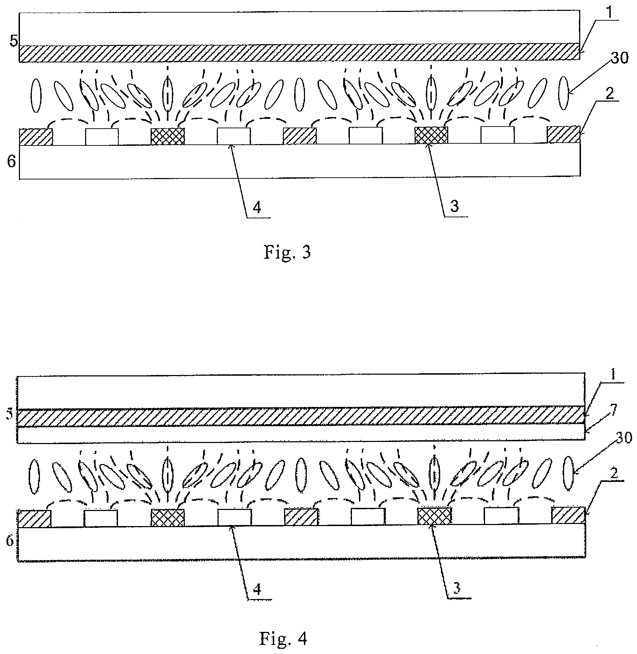

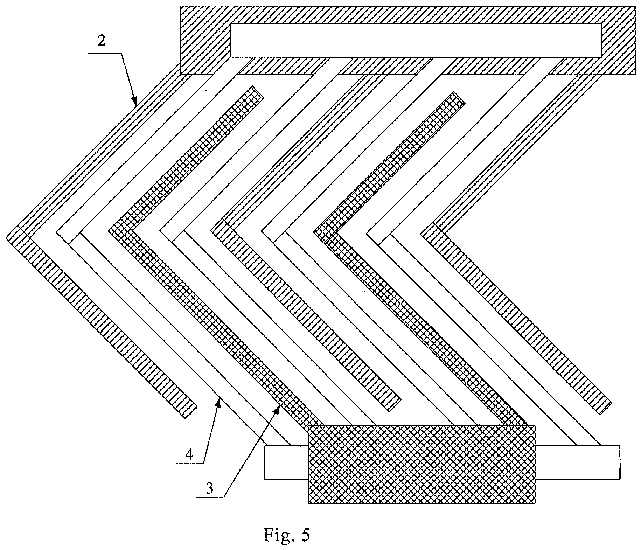

A liquid crystal display panel provided by an example helpful to understand the invention, as shown in FIG. 3 to FIG. 5, includes an upper substrate (it may also be referred to as a color filter substrate) 5 and a lower substrate (it may also be referred to as an array substrate) 6 that are cell-assembled, and a liquid crystal layer 30 filled between the upper substrate 5 and the lower substrate 6, and an initial orientation state of liquid crystal molecules in the liquid crystal layer is perpendicular to the upper substrate 5 and the lower substrate 6. For example, the liquid crystal molecules in the liquid crystal layer have a positive dielectric anisotropy.

In an example helpful to understand the invention, the upper substrate 5 includes a fourth electrode 1 on a side close to the liquid crystal layer. In the example, the fourth electrode 1 is set to be a common electrode (Com electrode). However, the fourth electrode 1 is not necessary, and the fourth electrode 1 may not be provided on the upper substrate 5. The lower substrate 6 corresponds to a plurality of pixel regions, and the lower substrate 6 includes a first electrode 2 and a second electrode 3 that are located on the side close to the liquid crystal layer 30 in each of the pixel regions. The first electrode 2 includes at least one first electrode strip, and the second electrode 3 includes at least one second electrode strip. For example, the first electrode strip and the second electrode strip may be disposed alternately.

In an example helpful to understand the invention, the lower substrate 6 further includes a third electrode 4 that is located on the side close to the liquid crystal layer 30 in each of the pixel regions. The third electrode 4 includes at least one third electrode strip that is located between the first electrode strip and the second electrode strip that are adjacent; and an electric potential of the third electrode falls between an electric potential of the first electrode and an electric potential of the second electrode.

In an example helpful to understand the invention, the first electrode 2 is set to be a common electrode (Com electrode) as well, namely, the fourth electrode 1 and the first electrode 2 are connected to each other; but they may be arranged to not be connected with each other and have different electric potentials, either. The second electrode 3 is set to be a pixel electrode (Pix electrode). Where, when no voltage is applied, an orientation (i.e. an initial orientation) of liquid crystal molecules in the liquid crystal layer 30 is perpendicular to the upper substrate 5 and the lower substrate 6.

In an example helpful to understand the invention, for the lower substrate, in each of the pixel regions, there are more than one for each of the first electrode strip, the second electrode strip and the third electrode strip, and moreover, the first electrode strips are electrically connected to each, the second electrode strips are electrically connected to each, and the third electrode strips are electrically connected to each.

In an example helpful to understand the invention, the first electrode strip of the first electrode 2, the second electrode strip of the second electrode 3 and the third electrode strip of the third electrode 4 may have the same width or different widths. For example, with reference to FIG. 7, a width a of the first electrode strip, a width b of the third electrode strip, and a width c of the second electrode strip are not the same as each other.

In an example helpful to understand the invention, the third electrode 4 is located on the same plane as the first electrode 2 and the second electrode 3. Moreover, between electrode strips of the first electrode 2 and the second electrode 3 that are adjacent, a plurality of electrode strips of the third electrode 4 may be provided. And, the third electrode 4 is not connected to each of the fourth electrode 1, the first electrode 2 and the second electrode 3, namely, the third electrode 4 is in an electrically floating state. As such, under an electric field, an electric potential of the third electrode 4 falls between an electric potential of the fourth electrode 1 or the first electrode 2 and an electric potential of the second electrode 3.

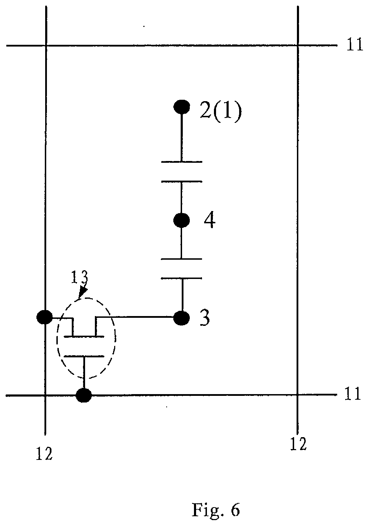

For example, when a voltage is applied to the liquid crystal display panel, it is possible that a voltage V1 applied to the fourth electrode 1 and the first electrode 2 is set to be smaller than a voltage V2 applied to the third electrode 4, and the voltage V2 applied to the third electrode 4 is set to be smaller than a voltage V3 applied to the second electrode 3. That is, V1<V2<V3. An equivalent circuit diagram of a pixel region of the liquid crystal display panel is shown in FIG. 6, and within the pixel region defined by a gate line 11 and a data line 12 that cross over each other, there are applied three voltages, which are V3 conducted to the second electrode 3 from the data line 12 via a TFT 13, V1 conducted to the first electrode 2 from the fourth electrode 1, and V2 separately conducted to the third electrode 4, respectively. The relationship among the three voltages satisfies the above formula V1<V2<V3.

After a voltage is applied, as shown in FIG. 3, the fourth electrode 1 and the first electrode 2 are equal in electric potential, and thus, no electric field is generated between them. A vertical electric field perpendicular to the substrate plane is generated between the second electrode 3 and the fourth electrode 1, and meanwhile, a transverse electric field parallel to the substrate plane is generated between the second electrode 3 and the third electrodes 4 on two sides of it too. Specifically, in the embodiment, still more, a vertical electric field perpendicular to the substrate plane is generated between the third electrode 4 and the fourth electrode 1, and meanwhile, a transverse electric field parallel to the substrate plane is generated between the third electrode 4 and the first electrode 2 and the second electrode 3 on two sides of it as well.

In general, in the liquid crystal panel provided by the embodiment, transverse electric fields are generated between the first electrode 2, the second electrode 3 and the third electrode 4, respectively, and it is possible that the deflection degree of liquid crystal molecules in the space region between the first electrode and the second electrode is increased without increasing the driving voltage of the first electrode and the second electrode, so as to enhance the luminance of corresponding regions. In turn, the display quality of the liquid crystal display panel and the liquid crystal display can be improved. A vertical electric field is generated between the second electrode 3 and the fourth electrode 1, a vertical electric field is generated between the third electrode 4 and the fourth electrode 1, so that the number of bright and dark stripes in the liquid crystal display can be reduced, and the display quality of the liquid crystal display panel can be improved accordingly as well.

In an example helpful to understand the invention, the first electrode strip of the first electrode 2, the second electrode strip of the second electrode 3 and the third electrode strip of the third electrode 4 on the lower substrate 6 may vary continuously in width on the plane. For example, each of the first electrode strip, the second electrode strip and the third electrode strip varies continuously in a manner of being wider in the upper part of the picture, and being narrower in the lower part of the picture. Of course, this is merely an example, and continuous variations in other forms may also be possible.

In an example helpful to understand the invention, further, the first electrode strip of the first electrode 2, the second electrode strip of the second electrode 3 and the third electrode strip of the third electrode 4 on the lower substrate 6 may be in a step form on the plane. For example, each of the first electrode strip, the second electrode strip and the third electrode strip is narrower in the upper part of the picture, wider in the lower part of the picture, and changed from narrow to wide gradually in steps. Certainly, this is merely an example, and stepwise changes in other forms may also be possible. For example, the reduction in width of the first electrode strip, the second electrode strip and the third electrode strip is in the same direction, namely, each shrinks from the lower part to the upper part of the picture, and it may also be the opposite, namely, each shrinks from the upper part to the lower part of the picture.

In an embodiment of the invention, a width of a spacing between the first electrode strip of the first electrode 2 and the third electrode strip of the third electrode 4 and a width of a spacing between the second electrode strip of the second electrode 3 and the third electrode strip of the third electrode 4 are different. In the embodiment of the invention, for example, as shown in FIG. 8, a space width d between the first electrode strip of the first electrode 2 and the third electrode strip of the third electrode 4 and a space width e between the second electrode strip of the second electrode 3 and the third electrode strip of the third electrode 4 are different. In one pixel region, if a spacing on the left side of the picture is smaller than a spacing on the right side of the picture, the V-T property will be different, and the viewing angle property is better as well.

In an embodiment of the invention, widths of spacing between any adjacent the first electrode strip of the first electrode 2 and the third electrode strip of the third electrode 4 are different from each other, and widths of spacing between any adjacent the second electrode strip of the second electrode 3 and the third electrode strip of the third electrode 4 are different from each other.

In addition, the first electrode strip of the first electrode 2, the second electrode strip of the second electrode 3 and the third electrode strip of the third electrode 4 in the embodiment of the invention are each bent into a V shape.

In the liquid crystal display panel provided by an example helpful to understand of the invention, as shown in FIG. 4, the upper substrate 5 further includes a protective layer 7 formed on the fourth electrode 1. As compared with a structure without the protective layer 7, having the protective layer 7 enables a tilt angle of the electric field to be larger, so that the luminance of corresponding regions is enhanced. In turn, the liquid crystal display panel can be improved.

In addition, it is to be noted that, the lower substrate 6 corresponds to the above array substrate 6, the upper substrate 5 corresponds to the above color filter substrate 5, and thus same reference numerals are used for description.

A liquid crystal display provided by an embodiment of the invention includes the features of appended claim 3.

## Claims

1. An array substrate (6) comprising a plurality of pixel regions, each of which comprises
a first electrode (2) and a second electrode (3) on a side of the array substrate (6), the first electrode (2) comprising a plurality of first electrode strips, the second electrode (3) comprising a plurality of second electrode strips;
a third electrode (4) on the side of the array substrate (6), the third electrode (4) comprising a plurality of third electrode strips; wherein the third electrode (4) is arranged to be in an electrically floating state such that an electric potential of the third electrode (4) falls between an electric potential of the first electrode (2) and an electric potential of the second electrode (3) when voltages are applied to the first electrode (2) and second electrode (3),
**characterized in that**
the first electrode strips are electrically connected with each other, the second electrode strips are electrically connected with each other, and the third electrode strips are electrically connected with each other,
the first electrode strips, the second electrode strips and the third electrode strips each are bent into a V shape in a same plane parallel to the array substrate (6),
the first electrode strips, the second electrode strips and the third electrode strips are alternately arranged in such a manner that
one of the third electrode strips is disposed between every adjacent ones of the first electrode strips and the second electrode strips;
every adjacent ones of the first electrode strips are spaced by at least one of the third electrode strips; and
every adjacent ones of the second electrode strips are spaced by at least one of the third electrode strips,
the first electrode strips, the second electrode strips and the third electrode strips are different from each other in width,
the width of the spacing between adjacent ones of the first electrode strips and the third electrode strips is different from the width of the spacing between adjacent ones of the second electrode strips and the third electrode strips, and
the widths of the spacing between any adjacent ones of the first electrode strips and the third electrode strips are different from each other, and the widths of the spacing between any adjacent ones of the second electrode strips and the third electrode strips are different from each other.

2. The array substrate according to claim 1, wherein, the first electrode strip, the second electrode strip and the third electrode strip are in the same plane.

3. A liquid crystal display panel, comprising an upper substrate (5) and a lower substrate (6) cell-assembled, and a liquid crystal layer (30) filled between the upper substrate (5) and the lower substrate (6), an initial orientation state of liquid crystal molecules in the liquid crystal layer (30) is perpendicular to the upper substrate (5) and the lower substrate (6); wherein, the lower substrate (6) is the array substrate (6) according to claim 1 or 2.

4. The liquid crystal display panel as according to claim 3, wherein, the upper substrate (5) comprises a fourth electrode (1) on a side close to the liquid crystal layer (30).

5. The liquid crystal display panel according to claim 4, wherein, the fourth electrode (1) and the first electrode (2) are connected to each other.

6. The liquid crystal display panel according to claim 4 or 5, wherein, the upper substrate (5) further comprises a protective layer (7) formed on the fourth electrode (1).

7. A liquid crystal display, comprising the liquid crystal display panel according to any one of the claims 3 to 6.

## Patentansprüche

1. Array-Substrat (6) mit einer Vielzahl von Pixel-Regionen, von denen jede aufweist
eine erste Elektrode (2) und eine zweite Elektrode (3) auf einer Seite des Array-Substrats (6), wobei die erste Elektrode (2) eine Vielzahl von ersten Elektrodenstreifen aufweist, wobei die zweite Elektrode (3) eine Vielzahl von zweiten Elektrodenstreifen aufweist;
eine dritte Elektrode (4) auf der Seite des Array-Substrats (6), wobei die dritte Elektrode (4) eine Vielzahl von dritten Elektrodenstreifen aufweist; wobei die dritte Elektrode (4) eingerichtet ist, sich in einem elektrisch potentialfreien Zustand derart zu befinden, dass ein elektrisches Potential der dritten Elektrode (4) zwischen ein elektrisches Potential der ersten Elektrode (2) und ein elektrisches Potential der zweiten Elektrode (3) fallt, sobald Spannungen an die erste Elektrode (2) und die zweite Elektrode (3) angelegt werden,
**dadurch gekennzeichnet, dass**
die ersten Elektrodenstreifen elektrisch miteinander verbunden sind, die zweiten Elektrodenstreifen elektrisch miteinander verbunden sind und die dritten Elektrodenstreifen elektrisch miteinander verbunden sind,
die ersten Elektrodenstreifen, die zweiten Elektrodenstreifen und die dritten Elektrodenstreifen jeweils in einer gleichen Ebene parallel zu dem Array-Substrat (6) in eine V-Form gebogen sind,
die ersten Elektrodenstreifen, die zweiten Elektrodenstreifen und die dritten Elektrodenstreifen abwechselnd in solch einer Weise angeordnet sind, dass
einer der dritten Elektrodenstreifen zwischen allen benachbarten der ersten Elektrodenstreifen und der zweiten Elektrodenstreifen angeordnet ist;
alle benachbarten der ersten Elektrodenstreifen durch wenigstens einen der dritten Elektrodenstreifen getrennt sind; und
alle benachbarten der zweiten Elektrodenstreifen durch wenigstens einen der dritten Elektrodenstreifen getrennt sind,
die ersten Elektrodenstreifen, die zweiten Elektrodenstreifen und die dritten Elektrodenstreifen unterschiedlich voneinander in der Breite sind,
die Breite des Abstands zwischen benachbarten der ersten Elektrodenstreifen und der dritten Elektrodenstreifen unterschiedlich von der Breite des Abstands zwischen benachbarten der zweiten Elektrodenstreifen und der dritten Elektrodenstreifen ist, und
die Breiten des Abstands zwischen beliebigen benachbarten der ersten Elektrodenstreifen und der dritten Elektrodenstreifen unterschiedlich voneinander sind, und die Breiten des Abstands zwischen beliebigen benachbarten der zweiten Elektrodenstreifen und der dritten Elektrodenstreifen unterschiedlich voneinander sind.

2. Array-Substrat gemäß Anspruch 1, wobei die ersten Elektrodenstreifen, die zweiten Elektrodenstreifen und die dritten Elektrodenstreifen sich in derselben Ebene befinden.

3. Flüssigkristallanzeige-Panel mit einem oberen Substrat (5) und einem unteren Substrat (6), die Zellen zusammengefügt sind, und einer Flüssigkristallschicht (30), die zwischen das obere Substrat (5) und das untere Substrat (6) eingefüllt ist, wobei ein Anfangsausrichtungszustand der Flüssigkristallmoleküle in der Flüssigkristallschicht (30) senkrecht zu dem oberen Substrat (5) und dem unteren Substrat (6) ist; wobei das untere Substrat (6) das Array-Substrat (6) gemäß Anspruch 1 oder 2 ist.

4. Flüssigkristallanzeige-Panel gemäß Anspruch 3, wobei das obere Substrat (5) eine vierte Elektrode (1) auf der Seite nahe der Flüssigkristallschicht (30) aufweist.

5. Flüssigkristallanzeige-Panel gemäß Anspruch 4, wobei die vierte Elektrode (1) und die erste Elektrode (2) miteinander verbunden sind.

6. Flüssigkristallanzeige-Panel gemäß Anspruch 4 oder 5, wobei das obere Substrat (5) weiter eine Schutzschicht (7) aufweist, die auf der vierten Elektrode (1) gebildet ist.

7. Flüssigkristallanzeige mit dem Flüssigkristallanzeige-Panel gemäß einem der Ansprüche 3 bis 6.

## Revendications

1. Substrat de réseau (6) comprenant une pluralité de régions de pixel(s) dont chacune comprend :
une première électrode (2) et une deuxième électrode (3) sur un côté du substrat de réseau (6), la première électrode (2) comprenant une pluralité de bandes de première électrode, la deuxième électrode (3) comprenant une pluralité de bandes de deuxième électrode ;
une troisième électrode (4) sur le côté du substrat de réseau (6), la troisième électrode (4) comprenant une pluralité de bandes de troisième électrode ; dans lequel la troisième électrode (4) est agencée de manière à ce qu'elle soit dans un état électriquement flottant de telle sorte qu'un potentiel électrique de la troisième électrode (4) soit situé entre un potentiel électrique de la première électrode (2) et un potentiel électrique de la deuxième électrode (3) lorsque des tensions sont appliquées sur la première électrode (2) et sur la deuxième électrode (3) ;
**caractérisé en ce que** :
les bandes de première électrode sont connectées électriquement les unes aux autres, les bandes de deuxième électrode sont connectées électriquement les unes aux autres et les bandes de troisième électrode sont connectées électriquement les unes aux autres ;
les bandes de première électrode, les bandes de deuxième électrode et les bandes de troisième électrode sont chacune fléchies selon une forme de V dans un même plan qui est parallèle au substrat de réseau (6) ;
les bandes de première électrode, les bandes de deuxième électrode et les bandes de troisième électrode sont agencées en alternance de telle sorte que :
l'une des bandes de troisième électrode soit disposée entre chaque jeu de deux bandes d'électrode adjacentes des bandes de première électrode et des bandes de deuxième électrode ;
les bandes d'électrode de chaque jeu de deux bandes d'électrode adjacentes des bandes de première électrode sont espacées par au moins l'une des bandes de troisième électrode ; et
les bandes d'électrode de chaque jeu de deux bandes d'électrode adjacentes des bandes de deuxième électrode sont espacées par au moins l'une des bandes de troisième électrode ;
les bandes de première électrode, les bandes de deuxième électrode et les bandes de troisième électrode sont différentes les unes des autres en termes de largeur ;
la largeur de l'espacement entre chaque jeu de deux bandes d'électrode adjacentes des bandes de première électrode et des bandes de troisième électrode est différente de la largeur de l'espacement entre chaque jeu de deux bandes d'électrode adjacentes des bandes de deuxième électrode et des bandes de troisième électrode ; et
les largeurs de l'espacement entre chaque jeu de deux bandes d'électrode adjacentes des bandes de première électrode et des bandes de troisième électrode sont différentes les unes des autres, et les largeurs de l'espacement entre chaque jeu de deux bandes d'électrode adjacentes des bandes de deuxième électrode et des bandes de troisième électrode sont différentes les unes des autres.

2. Substrat de réseau selon la revendication 1, dans lequel la bande de première électrode, la bande de deuxième électrode et la bande de troisième électrode sont dans le même plan.

3. Panneau d'affichage à cristaux liquides, comprenant un substrat supérieur (5) et un substrat inférieur (6) qui sont assemblés en cellule, et une couche de cristaux liquides (30) qui est remplie entre le substrat supérieur (5) et le substrat inférieur (6), un état d'orientation initiale de molécules de cristaux liquides dans la couche de cristaux liquides (30) est perpendiculaire au substrat supérieur (5) et au substrat inférieur (6) ; dans lequel le substrat inférieur (6) est le substrat de réseau (6) selon la revendication 1 ou 2.

4. Panneau d'affichage à cristaux liquides selon la revendication 3, dans lequel le substrat supérieur (5) comprend une quatrième électrode (1) sur un côté qui est proche de la couche de cristaux liquides (30).

5. Panneau d'affichage à cristaux liquides selon la revendication 4, dans lequel la quatrième électrode (1) et la première électrode (2) sont connectées l'une à l'autre.

6. Panneau d'affichage à cristaux liquides selon la revendication 4 ou 5, dans lequel le substrat supérieur (5) comprend en outre une couche de protection (7) qui est formée sur la quatrième électrode (1).

7. Affichage à cristaux liquides, comprenant le panneau d'affichage à cristaux liquides selon l'une quelconque des revendications 3 à 6.
